# EUROPÄISCHE PATENTSCHRIFT

(11) **EP 3 926 095 B1**
(45) Veröffentlichungstag und Bekanntmachung des Hinweises auf die Patenterteilung: **02.08.2023**
(21) Anmeldenummer: 21178517.5
(22) Anmeldetag: 09.06.2021
(51) Int. Cl.: E01B 29/24, B23P 19/06

(54) **BEARBEITUNGSMASCHINE UND VERFAHREN ZUR GLEISBEARBEITUNG**
PROCESSING MACHINE AND METHOD FOR TRACK PROCESSING
MACHINE ET PROCÉDÉ DE TRAVAIL SUR VOIES FERRÉES

(30) Priorität: 16.06.2020 DE 102020207441
(43) Veröffentlichungstag der Anmeldung: 22.12.2021
(73) Patentinhaber: Robel Bahnbaumaschinen GmbH, 83395 Freilassing (DE)
(72) Erfinder: Hölzlwimmer, Thomas, 84508 Burgkirchen an der Alz (DE)
(74) Vertreter: Rau, Schneck & Hübner Patentanwälte Rechtsanwälte PartGmbB

(56) Entgegenhaltungen:
- FR-A- 982 711
- US-A- 2 597 337
- US-B2- 9 234 315

## Beschreibung

Die Erfindung betrifft eine Bearbeitungsmaschine und ein Verfahren zur Gleisbearbeitung.

Aus der DE 20 2012 007 818 U1 ist eine manuell verschiebbare Maschine zur Gleisbearbeitung und Gleiserhaltung bekannt. Die Maschine umfasst einen Fahrwerksrahmen, an dem eine Arbeitseinheit und eine Motoreinheit angeordnet sind. Die Maschine dient beispielsweise zur Montage von Schienenklemmen. Die Arbeitseinheit umfasst ein antreibbares Arbeitswerkzeug. Die Motoreinheit dient zur Energieversorgung der Arbeitseinheit und ist mit dieser durch eine lösbare Kupplung verbunden. Für den Transport können die Arbeitseinheit und die Motoreinheit voneinander getrennt werden, wodurch eine Bedienperson körperlich entlastet wird.

Aus der US 9 234 315 B2 ist eine Vorrichtung zum Montieren und Demontieren von Schienenbefestigungselementen bekannt. Die Vorrichtung umfasst eine Auslegerbaugruppe, an der an einem ersten Ende eine Antriebsbaugruppe und an einem zweiten Ende ein Bearbeitungskopf mit einem Werkzeug angeordnet ist. Die Auslegerbaugruppe, die Antriebsbaugruppe und der Bearbeitungskopf sind auf einer ersten Schiene angeordnet und über eine Stützrahmenbaugruppe auf einer zweiten Schiene abgestützt. Die Auslegerbaugruppe ist hierzu drehbar an der Stützrahmenbaugruppe angeordnet. Die Auslegerbaugruppe umfasst mehrere Drehpunkte, die zum Ausbalancieren der Auslegerbaugruppe in Abhängigkeit des Gewichts des Bearbeitungskopfes und des Gewichts der Antriebsbaugruppe dienen.

Aus der US 2 597 337 A ist eine Bearbeitungsmaschine zur Gleisbearbeitung bekannt. Die Bearbeitungsmaschine umfasst ein Fahrwerk, an dem über eine Verschwenkmechanik ein Träger verschwenkbar gelagert ist. An einem ersten Ende des Trägers ist ein Bearbeitungswerkzeug angeordnet, wohingegen an einem zweiten Ende des Trägers ein Gegengewicht angeordnet ist. Zum Ausbalancieren des Trägers ist das Gegengewicht über eine Einstellmechanik entlang des Trägers verschiebbar.

Aus der FR 982 711 A ist eine Bearbeitungsmaschine zur Gleisbearbeitung bekannt. Die Bearbeitungsmaschine umfasst einen Träger, der über eine Gelenkeinheit mit einem Fahrwerk verbunden ist. Der Träger ist starr ausgebildet. An dem Träger sind ein Werkzeug und ein Motor befestigt. Der Motor dient als Gegengewicht zu dem Werkzeug.

Der Erfindung liegt die Aufgabe zugrunde, eine manuell verlagerbare Bearbeitungsmaschine zu schaffen, die eine einfache, bedienerfreundliche und flexible Gleisbearbeitung ermöglicht.

Diese Aufgabe wird durch eine Bearbeitungsmaschine mit den Merkmalen des Anspruchs 1 gelöst. Die Einstellmechanik ermöglicht ein Einstellen des Abstands zwischen dem Schwerpunkt des Bearbeitungsaggregats und dem Schwerpunkt des Gegengewichts. Hierdurch wird ermöglicht, dass ein Gesamtschwerpunkt der Bearbeitungsmaschine im Wesentlichen über der Gelenkeinheit positioniert ist, so dass die Bearbeitungsmaschine relativ zu der Gelenkeinheit ausbalanciert ist. Durch das Ausbalancieren werden unerwünschte Kippmomente während des Bearbeitens des Gleises vermieden, wodurch eine einfache und bedienerfreundliche Gleisbearbeitung ermöglicht wird. Unterschiedliche Gewichte des Bearbeitungsaggregats, beispielsweise aufgrund von unterschiedlichen Bearbeitungswerkzeugen und/oder unterschiedlichen Antriebsmotoren, können in einfacher Weise durch die Einstellmechanik ausbalanciert werden. Durch das Einstellen des Abstands wird ein Gesamtschwerpunkt der Bearbeitungsmaschine relativ zu der Gelenkeinheit, insbesondere relativ zu einer vertikalen Ebene, positioniert. Die vertikale Ebene ist insbesondere durch eine horizontale Schwenkachse der Gelenkeinheit definiert und verläuft senkrecht zu einer horizontalen Ebene. Die horizontale Ebene wird insbesondere durch die Drehachsen des Fahrwerks definiert. Mittels der Einstellmechanik ist der Gesamtschwerpunkt in einem Arbeitszustand in der vertikalen Ebene positionierbar und in einem Transportzustand außerhalb der vertikalen Ebene positionierbar. Die Einstellmechanik ermöglicht insbesondere ein stufenloses Einstellen des Abstands zwischen dem Schwerpunkt des Bearbeitungsaggregats und dem Schwerpunkt des Gegengewichts. Der Abstand ist insbesondere parallel zu einer durch das Fahrwerk definierten Ebene einstellbar. Die Einstellmechanik ermöglicht vorzugsweise ein manuelles Einstellen des Abstands. Vorzugsweise ermöglicht die Einstellmechanik ein Verlagern des Bearbeitungsaggregats und des Gegengewichts relativ zueinander. Darüber hinaus ermöglicht die Einstellmechanik die Bearbeitungsmaschine von einem kompakten Transportzustand in einen ausbalancierten Arbeitszustand zu überführen und umgekehrt.

Die Einstellmechanik ist zumindest teilweise in den Träger integriert. Der Träger umfasst die Einstellmechanik zumindest teilweise. Dadurch, dass der Träger zwei Trägerbauteile umfasst, die relativ zueinander verlagerbar sind, ist ein einfaches Einstellen des Abstands des Schwerpunkts des Bearbeitungsaggregats und des Schwerpunkts des Gegengewichts möglich. Das Bearbeitungsaggregat ist an dem ersten Trägerbauteil befestigt, wohingegen das Gegengewicht an dem zweiten Trägerbauteil befestigt ist. Mittels der Einstellmechanik können die Trägerbauteile relativ zueinander verlagert werden, so dass ein Gesamtschwerpunkt der Bearbeitungsmaschine relativ zu der Gelenkeinheit positioniert werden kann. Vorzugsweise sind die Trägerbauteile stufenlos zueinander verlagerbar. Die Trägerbauteile sind beispielsweise relativ zueinander linear verlagerbar und/oder relativ zueinander verschwenkbar.

Die Bearbeitungsmaschine ist insbesondere manuell auf einem Gleis verlagerbar, beispielsweise verfahrbar bzw. verschiebbar, und/oder manuell betätigbar. Vorzugsweise ist das Bearbeitungsaggregat mittels der Gelenkeinheit manuell verschwenkbar. Die Bearbeitungsmaschine ist beispielsweise als Schraubmaschine zum Montieren bzw. Anziehen und/oder zum Demontieren bzw. Lösen von Schwellenschrauben und/oder als Klippmaschine zum Montieren und Demontieren von Schienenklemmen ausgebildet. Das Bearbeitungsaggregat umfasst insbesondere einen elektrischen Antriebsmotor zum Antreiben eines Bearbeitungswerkzeugs. Vorzugsweise umfasst die Bearbeitungsmaschine eine Steuereinheit zum Ansteuern des Bearbeitungsaggregats.

Eine Bearbeitungsmaschine nach Anspruch 2 gewährleistet eine einfache, bedienerfreundliche und flexible Gleisbearbeitung. Die horizontale Schwenkachse ermöglicht ein manuelles Höhenverstellen des Bearbeitungsaggregats. Hierdurch wird beispielsweise ein Bearbeitungswerkzeug zu der Gleisbearbeitungsstelle geführt. Beispielsweise wird eine Schwellenschraube angezogen und/oder gelöst und/oder eine Schienenklemme montiert und/oder demontiert. Die horizontale Schwenkachse definiert eine vertikale Ebene. Die vertikale Ebene verläuft insbesondere senkrecht zu einer von dem Fahrwerk definierten Ebene. Der Schwerpunkt des Bearbeitungsaggregats und der Schwerpunkt des Gegengewichts sind in einem Arbeitszustand an unterschiedlichen Seiten der vertikalen Ebene angeordnet. Insbesondere sind das Bearbeitungsaggregat und das Gegengewicht in dem Arbeitszustand an unterschiedlichen Seiten der vertikalen Ebene angeordnet. Vorzugsweise dient die Einstellmechanik zum Anordnen eines Gesamtschwerpunkts der Bearbeitungsmaschine nahe an der vertikalen Ebene, insbesondere in der vertikalen Ebene.

Eine Bearbeitungsmaschine nach Anspruch 3 gewährleistet eine einfache, bedienerfreundliche und flexible Gleisbearbeitung. Die vertikale Schwenkachse ermöglicht ein Positionieren eines Bearbeitungswerkzeugs an zwei Seiten einer Schiene durch einfaches manuelles Verschwenken. Hierdurch können beispielsweise Schwellenschrauben und/oder Schienenklemmen an den zwei Seiten einer Schiene montiert/demontiert werden. Die vertikale Schwenkachse verläuft insbesondere senkrecht zu einer horizontalen Schwenkachse der Gelenkeinheit. Vorzugsweise verläuft die vertikale Schwenkachse senkrecht zu einer Ebene, die durch das Fahrwerk definiert ist.

Eine Bearbeitungsmaschine nach Anspruch 4 gewährleistet eine einfache, bedienerfreundliche und flexible Gleisbearbeitung. Die Gelenkeinheit, insbesondere eine horizontale Schwenkachse und/oder eine vertikale Schwenkachse, definiert eine vertikale Ebene. Die vertikale Ebene verläuft insbesondere senkrecht zu einer horizontalen Ebene, die durch das Fahrwerk definiert ist. Dadurch, dass das Bearbeitungsaggregat und das Gegengewicht in einem Arbeitszustand an unterschiedlichen Seiten der vertikalen Ebene angeordnet sind, kann mittels der Einstellmechanik ein Gesamtschwerpunkt der Bearbeitungsmaschine nahe der vertikalen Ebene, insbesondere in der vertikalen Ebene, positioniert werden. Hierdurch ist die Bearbeitungsmaschine relativ zu der Gelenkeinheit, insbesondere relativ zu der horizontalen Schwenkachse, ausbalanciert. Insbesondere ermöglicht die Einstellmechanik ein Verlagern des Gegengewichts relativ zu der vertikalen Ebene.

Eine Bearbeitungsmaschine nach Anspruch 5 gewährleistet eine einfache, bedienerfreundliche und flexible Gleisbearbeitung. Der mindestens eine Handgriff ist relativ zu der Gelenkeinheit bzw. einer durch die Gelenkeinheit definierten vertikalen Ebene vorzugsweise an derselben Seite wie das Bearbeitungsaggregat angeordnet. Vorzugsweise ist das Bearbeitungsaggregat zwischen dem mindestens einen Handgriff und der Gelenkeinheit angeordnet. Hierdurch wird ein vorteilhafter Hebelarm zum manuellen Betätigen der Gelenkeinheit, insbesondere zum Verschwenken des Bearbeitungsaggregats um eine horizontale Schwenkachse und/oder eine vertikale Schwenkachse der Gelenkeinheit erzielt. Vorzugsweise weist der mindestens eine Handgriff einen Abstand A_{H} von der horizontalen Schwenkachse und/oder vertikalen Schwenkachse auf, wobei gilt: 60 cm ≤ A_{H} ≤ 140 cm, insbesondere 70 cm ≤ A_{H} ≤ 130 cm, und insbesondere 80 cm ≤ A_{H} ≤ 120 cm. Der Abstand A_{H} ist in einer horizontalen Richtung definiert, insbesondere parallel zu einer horizontalen Ebene, die durch das Fahrwerk definiert ist.

Eine Bearbeitungsmaschine nach Anspruch 6 gewährleistet eine einfache, bedienerfreundliche und flexible Gleisbearbeitung. Dadurch, dass der mindestens eine erste Handgriff und der mindestens eine zweite Handgriff an unterschiedlichen Seiten einer vertikalen Ebene angeordnet sind, kann die Bearbeitungsmaschine durch zwei Bedienpersonen in einfacher Weise angehoben und transportiert bzw. positioniert werden. Vorzugsweise weist die Bearbeitungsmaschine mindestens zwei erste Handgriffe und/oder mindestens zwei zweite Handgriffe auf. Die vertikale Ebene wird insbesondere durch eine horizontale Schwenkachse und/oder durch eine vertikale Schwenkachse der Gelenkeinheit definiert. Die vertikale Ebene verläuft insbesondere senkrecht zu einer horizontalen Ebene, die durch das Fahrwerk definiert ist.

Eine Bearbeitungsmaschine nach Anspruch 7 gewährleistet eine einfache, bedienerfreundliche und flexible Gleisbearbeitung. Durch die mindestens eine Führung sind das Bearbeitungsaggregat und das Gegengewicht geführt zueinander verlagerbar. Hierdurch kann der Abstand des Schwerpunkts des Bearbeitungsaggregats und des Schwerpunkts des Gegengewichts einfach, bedienerfreundlich und genau eingestellt werden. Vorzugsweise ist die mindestens eine Führung als Linearführung ausgebildet. Die mindestens eine Führung ist insbesondere als Teleskopführung ausgebildet. Beispielsweise sind ein erstes Trägerbauteil und ein zweites Trägerbauteil mittels einer Führung relativ zueinander verlagerbar. Die Trägerbauteile sind vorzugsweise mittels einer Linearführung linear zueinander verlagerbar.

Eine Bearbeitungsmaschine nach Anspruch 8 gewährleistet eine einfache, bedienerfreundliche und flexible Gleisbearbeitung. Durch das mindestens eine Arretierelement kann die Bearbeitungsmaschine in einem Transportzustand und/oder in einem Arbeitszustand arretiert werden. Zum Überführen der Bearbeitungsmaschine von dem Transportzustand in den Arbeitszustand und umgekehrt und/oder zum Einstellen des Abstands des Schwerpunkts des Bearbeitungsaggregats und des Schwerpunkts des Gegengewichts wird das mindestens eine Arretierelement gelöst. Das mindestens eine Arretierelement ist beispielsweise eine Flügelschraube und/oder ein Spannhebel. Das mindestens eine Arretierelement dient insbesondere zum Arretieren der mindestens einen Führung der Einstellmechanik.

Eine Bearbeitungsmaschine nach Anspruch 9 gewährleistet eine einfache, bedienerfreundliche und flexible Gleisbearbeitung. Vorzugsweise ist die Energiebereitstellungseinheit auswechselbar, so dass die Bearbeitungsmaschine je nach Kundenwunsch mit einer gewünschten Energiebereitstellungseinheit betreibbar ist. Das Bearbeitungsaggregat und die Energiebereitstellungseinheit sind in einem Arbeitszustand vorzugsweise an unterschiedlichen Seiten einer vertikalen Ebene angeordnet, die durch die Gelenkeinheit definiert ist. Vorzugsweise ist das Bearbeitungsaggregat an einem ersten Trägerbauteil angeordnet, wohingegen die Energiebereitstellungseinheit an einem zweiten Trägerbauteil angeordnet ist. Die Energiebereitstellungseinheit umfasst insbesondere mindestens einen Akkumulator und/oder mindestens einen Kondensator und/oder einen Frequenzumrichter und/oder einen Gleichrichter und/oder einen Wechselrichter und/oder einen Versorgungsanschluss zum Anschließen an ein Energieversorgungsnetz und/oder eine Verbrennungsmotor-Generator-Einheit. Vorzugsweise stellt die Energiebereitstellungseinheit elektrische Energie bereit.

Eine Bearbeitungsmaschine nach Anspruch 10 gewährleistet eine einfache, bedienerfreundliche und flexible Gleisbearbeitung. Dadurch, dass die Energiebereitstellungseinheit das Gegengewicht ausbildet, ist ein separates Gegengewicht nicht erforderlich. Die Energiebereitstellungseinheit dient somit einerseits zur Energieversorgung des Bearbeitungsaggregats und andererseits zum Ausbalancieren der Bearbeitungsmaschine. Die Einstellmechanik dient somit zum Einstellen des Abstands des Schwerpunkts des Bearbeitungsaggregats und des Schwerpunkts der Energiebereitstellungseinheit. Vorzugsweise ist der Abstand stufenlos einstellbar. Hierdurch kann ein Gesamtschwerpunkt der Bearbeitungsmaschine relativ zu der Gelenkeinheit positioniert werden und insbesondere nahe einer vertikalen Ebene, vorzugsweise in der vertikalen Ebene, angeordnet werden. Hierdurch ist die Bearbeitungsmaschine insbesondere mit unterschiedlichen Energiebereitstellungseinheiten betreibbar und/oder ausbalancierbar, die ein unterschiedliches Gewicht haben.

Eine Bearbeitungsmaschine nach Anspruch 11 gewährleistet eine einfache, bedienerfreundliche und flexible Gleisbearbeitung. Dadurch, dass die Energiebereitstellungseinheit mindestens einen Akkumulator umfasst, ist die Bearbeitungsmaschine im Wesentlichen autark mit elektrischer Energie betreibbar. Vorzugsweise umfasst die Energiebereitstellungseinheit mehrere Akkumulatoren, die parallel und/oder in Reihe geschaltet sind. Der mindestens eine Akkumulator ist vorzugsweise auswechselbar, insbesondere auswechselbar an dem Träger angeordnet. Vorzugsweise ist das Bearbeitungsaggregat an einem ersten Trägerbauteil angeordnet, wohingegen die Energiebereitstellungseinheit mit dem mindestens einen Akkumulator an einem zweiten Trägerbauteil angeordnet ist. Durch den mindestens einen Akkumulator kann die Energiebereitstellungseinheit insbesondere das Gegengewicht ausbilden. Vorzugsweise umfasst die Energiebereitstellungseinheit mindestens einen Kondensator. Der mindestens eine Kondensator ist insbesondere parallel zu dem mindestens einen Akkumulator geschaltet. Der mindestens eine Kondensator dient zum Abpuffern von Leistungsspitzen im Betrieb und zum Vermeiden einer Überlastung des mindestens einen Akkumulators. Vorzugsweise umfasst die Energiebereitstellungseinheit mehrere Kondensatoren, die parallel und/oder in Reihe geschaltet sind. Die Energiebereitstellungseinheit umfasst insbesondere eine Akkumulator-Anordnung mit mehreren parallel und/oder in Reihe geschalteten Akkumulatoren und eine Kondensator-Anordnung mit mehreren parallel und/oder in Reihe geschalteten Kondensatoren. Die Akkumulator-Anordnung und die Kondensator-Anordnung sind vorzugsweise parallel zueinander geschaltet.

Eine Bearbeitungsmaschine nach Anspruch 12 gewährleistet eine einfache, bedienerfreundliche und flexible Gleisbearbeitung. Die mindestens zwei Führungsrollen sind vorzugsweise in einer Schienenlängsrichtung beabstandet zueinander angeordnet, so dass die Bearbeitungsmaschine mittels des Fahrwerks manuell auf einer Schiene, insbesondere auf genau einer Schiene, verschiebbar ist. Die mindestens zwei Führungsrollen umfassen jeweils eine Drehachse. Die Drehachsen verlaufen insbesondere parallel zueinander und sind in der Schienenlängsrichtung beabstandet zueinander. Die Drehachsen definieren insbesondere eine horizontale Ebene. Die mindestens zwei Führungsrollen weisen vorzugsweise jeweils mindestens einen Spurkranz auf. Vorzugsweise weisen die mindestens zwei Führungsrollen jeweils mindestens zwei Spurkränze auf. Die zwei Spurkränze sind insbesondere beidseitig eines Rollengrundkörpers angeordnet, so dass die jeweilige Führungsrolle auf einer Schiene geführt ist.

Eine Bearbeitungsmaschine nach Anspruch 13 gewährleistet eine einfache, bedienerfreundliche und flexible Gleisbearbeitung. Der Querausleger ermöglicht ein sicheres Abstützen auf einer benachbarten Schiene. Der Querausleger ist lösbar an dem Träger und/oder der Gelenkeinheit und/oder dem Fahrwerk befestigt. Vorzugsweise umfasst der Querausleger mindestens eine Abstützrolle zum Abstützen auf der benachbarten Schiene. Mittels der Abstützrolle ist der Querausleger auf der benachbarten Schiene manuell verlagerbar bzw. verschiebbar.

Der Erfindung liegt ferner die Aufgabe zugrunde, ein Verfahren zu schaffen, das eine einfache, bedienerfreundliche und flexible Gleisbearbeitung ermöglicht.

Diese Aufgabe wird durch ein Verfahren mit den Merkmalen des Anspruchs 14 gelöst. Die Vorteile des erfindungsgemäßen Verfahrens entsprechen den bereits beschriebenen Vorteilen der erfindungsgemäßen Bearbeitungsmaschine. Das Verfahren kann insbesondere mit mindestens einem Merkmal weitergebildet werden, das im Zusammenhang mit der erfindungsgemäßen Bearbeitungsmaschine beschrieben wurde.

Durch das Einstellen des Abstands zwischen dem Schwerpunkt des Bearbeitungsaggregats und dem Schwerpunkt des Gegengewichts mittels der Einstellmechanik wird ein Gesamtschwerpunkt der Bearbeitungsmaschine relativ zu der Gelenkeinheit positioniert. Vorzugsweise wird der Gesamtschwerpunkt in einem Arbeitszustand derart positioniert, dass für einen Abstand A_{P} von einer vertikalen Ebene, die durch die Gelenkeinheit definiert ist, gilt: 0 cm ≤ Ap ≤ 20 cm, insbesondere 0 cm ≤ Ap ≤ 10 cm, und insbesondere 0 cm ≤ A_{P} ≤ 5 cm.

Weitere Merkmale, Vorteile und Einzelheiten der Erfindung ergeben sich aus der nachfolgenden Beschreibung eines Ausführungsbeispiels. Es zeigen:
- Fig. 1: eine perspektivische Ansicht einer Bearbeitungsmaschine zur Gleisbearbeitung in einem Arbeitszustand,
- Fig. 2: eine Seitenansicht der Bearbeitungsmaschine in Fig. 1,
- Fig. 3: eine Frontansicht der Bearbeitungsmaschine in Fig. 1,
- Fig. 4: eine Seitenansicht der Bearbeitungsmaschine in einem Transportzustand, und
- Fig. 5: eine Draufsicht auf die Bearbeitungsmaschine in Fig. 4.

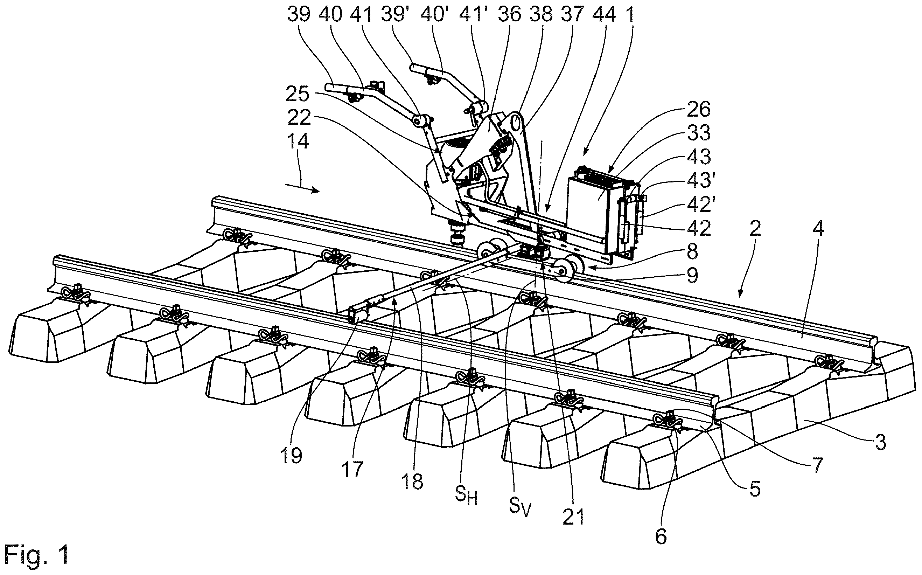

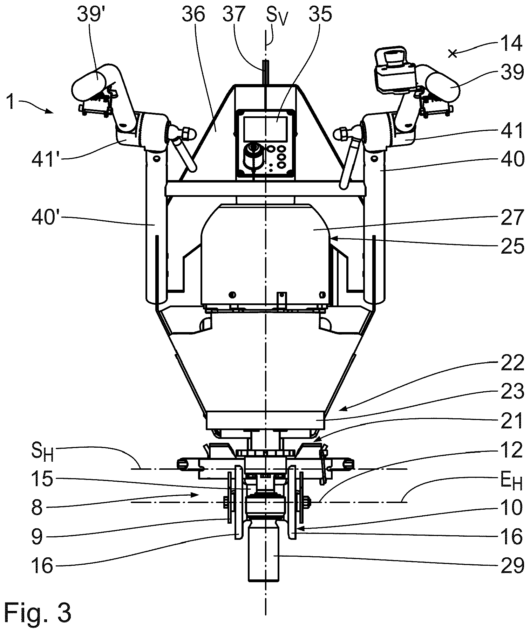

Die in den Fig. 1 bis 5 dargestellte Bearbeitungsmaschine 1 dient zum Bearbeiten eines Gleises 2. Das Gleis 2 umfasst Schwellen 3, die in einem nicht näher dargestellten Schotterbett angeordnet sind. Auf den Schwellen 3 sind Schienen 4, 5 befestigt. Die Schienen 4, 5 sind mittels Spannklemmen 6 und Schwellenschrauben 7 befestigt. Die Schwellenschrauben 7 sind in den Schwellen 3 verschraubt. Die Bearbeitungsmaschine 1 ist als Schraubmaschine zum Montieren bzw. Anziehen der Schwellenschrauben 7 und/oder zum Demontieren bzw. Lösen der Schwellenschrauben 7 ausgebildet.

Die Bearbeitungsmaschine 1 ist manuell auf der Schiene 4 verlagerbar bzw. verschiebbar. Die Bearbeitungsmaschine 1 umfasst hierzu ein Fahrwerk 8. Das Fahrwerk 8 weist einen Fahrwerkrahmen 9 auf, an dem zwei Führungsrollen 10, 11 um zugehörige Drehachsen 12, 13 drehbar gelagert sind. Die Drehachsen 12, 13 verlaufen parallel zueinander und sind in einer Schienenlängsrichtung 14 beabstandet voneinander an dem Fahrwerkrahmen 9 gelagert. Die Drehachsen 12, 13 definieren eine horizontale Ebene E_{H}.

Die Führungsrollen 10, 11 sind zur Selbstzentrierung auf der Schiene 4 ausgebildet. Hierzu weisen die Führungsrollen 10, 11 jeweils einen Rollengrundkörper 15 auf, an dem endseitig zwei Spurkränze 16 ausgebildet sind.

Zum Abstützen auf der benachbarten Schiene 5 umfasst die Bearbeitungsmaschine 1 einen Querausleger 17. Der Querausleger 17 umfasst eine Querstange 18, an der endseitig eine Abstützrolle 19 drehbar gelagert ist. Die Querstange 18 ist gegenüberliegend zu der Abstützrolle 19 mittels eines Schnellverschlusses 20 lösbar an dem Fahrwerkrahmen 9 befestigt.

Das Fahrwerk 8 ist mittels einer Gelenkeinheit 21 an einem Träger 22 befestigt. Der Träger 22 umfasst ein erstes Trägerbauteil 23 und ein zweites Trägerbauteil 24. Die Gelenkeinheit 21 ist an dem Fahrwerkrahmen 9 und dem ersten Trägerbauteil 23 angeordnet. An dem ersten Trägerbauteil 23 ist ein Bearbeitungsaggregat 25 befestigt. An dem zweiten Trägerbauteil 24 ist eine Energiebereitstellungseinheit 26 befestigt.

Die Gelenkeinheit 21 bildet eine horizontale Schwenkachse S_{H} zum Höhenverstellen des Bearbeitungsaggregats 25 aus. Die horizontale Schwenkachse S_{H} verläuft parallel zu der horizontalen Ebene E_{H}. Die horizontale Schwenkachse S_{H} definiert eine vertikale Ebene E_{V}, die senkrecht zu der horizontalen Ebene E_{H} verläuft.

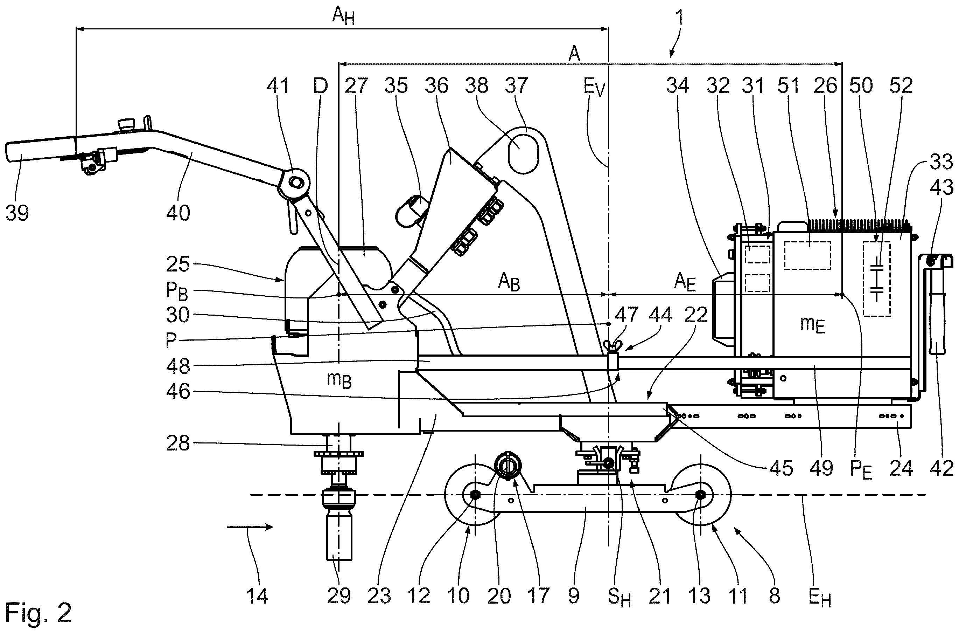

Die Gelenkeinheit 21 bildet ferner eine vertikale Schwenkachse Sv aus. Die vertikale Schwenkachse Sv verläuft senkrecht zu der horizontalen Schwenkachse S_{H}. In der in Fig. 2 dargestellten Schwenkposition des Trägers 22 um die horizontale Schwenkachse S_{H} verläuft die vertikale Schwenkachse Sv in der vertikalen Ebene E_{V}. Die vertikale Schwenkachse Sv ist durch Verschwenken des Trägers 22 um die horizontale Schwenkachse S_{H} relativ zu der vertikalen Ebene E_{V} verschwenkbar.

Der Träger 22 ist mittels der Gelenkeinheit 21 relativ zu dem Fahrwerk 8 um die horizontale Schwenkachse S_{H} und/oder um die vertikale Schwenkachse Sv verschwenkbar. Die horizontale Schwenkachse S_{H} dient zum Höhenverstellen des Bearbeitungsaggregats 25. Die vertikale Schwenkachse Sv dient zum Positionieren des Bearbeitungsaggregats 25 an zwei Seiten der Schiene 4. Hierdurch können die Schwellenschrauben 7 an beiden Seiten der Schiene 4, auf der die Bearbeitungsmaschine 1 mittels des Fahrwerks 8 angeordnet ist, montiert bzw. demontiert werden.

Das Bearbeitungsaggregat 25 umfasst einen elektrischen Antriebsmotor 27, der eine Antriebswelle 28 um eine Drehachse D drehantreibt. An der Antriebswelle 28 ist ein Bearbeitungswerkzeug 29 auswechselbar befestigt. Das Bearbeitungswerkzeug 29 ist beispielsweise eine Schraubnuss zum Betätigen der Schwellenschrauben 7.

Das Bearbeitungsaggregat 25 wird mittels der Energiebereitstellungseinheit 26 mit elektrischer Energie versorgt. Hierzu ist das Bearbeitungsaggregat 25 über eine Leitungsverbindung 30 an die Energiebereitstellungseinheit 26 angeschlossen. Die Energiebereitstellungseinheit 26 umfasst eine Ackumulator-Anordnung 31 mit mehreren Akkumulatoren 32, die in Reihe und/oder parallel geschaltet sind. Ferner umfasst die Energiebereitstellungseinheit 26 ein Gehäuse 33, in dem eine Kondensator-Anordnung 50 und eine Motorsteuerung 51 zur Steuerung und Energieversorgung des Antriebsmotors 27 angeordnet ist. Die Kondensator-Anordnung 50 umfasst mehrere Kondensatoren 52, die in Reihe und/oder parallel geschaltet sind. Die Kondensator-Anordnung 50 ist parallel zu der Akkumulator-Anordnung 31 geschaltet und dient zum Abpuffern von Leistungsspitzen im Betrieb und zur Vermeidung einer Überlastung der Akkumulator-Anordnung 31.

Die Akkumulator-Anordnung 31 ist auswechselbar an dem zweiten Trägerbauteil 24 befestigt. Die Akkumulator-Anordnung 31 umfasst zum Auswechseln einen Handgriff 34.

Zum Steuern des Bearbeitungsaggregats 25 umfasst die Bearbeitungsmaschine 1 eine Steuereinheit 35. Die Steuereinheit 35 ist an einem Schutzelement 36 befestigt. Das Schutzelement 36 ist beidseitig des Bearbeitungsaggregats 25 mit dem ersten Trägerbauteil 23 verbunden. Das Schutzelement 36 ist über ein Abstützelement 37 im Bereich der Gelenkeinheit 21 an dem ersten Trägerbauteil 23 abgestützt und mit diesem verbunden. Das Abstützelement 37 umfasst eine Befestigungsöse 38. Die Steuereinheit 35 ist zum Steuern des Bearbeitungsaggregats 25 in Signalverbindung mit der Energiebereitstellungseinheit 26 und insbesondere mit der Motorsteuerung 51.

Zum manuellen Betätigen der Gelenkeinheit 21 umfasst die Bearbeitungsmaschine 1 zwei erste Handgriffe 39, 39'. Die Handgriffe 39, 39' sind über ein jeweiliges Gestänge 40, 40' mit dem ersten Trägerbauteil 23 verbunden. Zur Höheneinstellung der Handgriffe 39, 39' umfasst das jeweilige Gestänge 40, 40' ein Schwenkgelenk 41, 41'. Die Handgriffe 39, 39' weisen parallel zu der horizontalen Ebene E_{H} einen minimalen Abstand A_{H} von der vertikalen Ebene Ev auf, wobei für den Abstand A_{H} gilt: 60 cm ≤ A_{H} ≤ 140 cm, insbesondere 70 cm ≤ A_{H} ≤ 130 cm, und insbesondere 80 cm ≤ A_{H} ≤ 120 cm.

An dem zweiten Trägerbauteil 24 sind zwei zweite Handgriffe 42, 42' befestigt. Die zweiten Handgriffe 42, 42' sind über ein jeweiliges Schwenkgelenk 43, 43' an dem zweiten Trägerbauteil 24 angeordnet. Die ersten Handgriffe 39, 39' und die zweiten Handgriffe 42, 42' sind an unterschiedlichen Seiten der vertikalen Ebene Ev angeordnet. Hierdurch kann die Bearbeitungsmaschine 1 durch zwei Bedienpersonen in einfacher Weise angehoben werden.

Das Bearbeitungsaggregat 25 weist einen ersten Schwerpunkt P_{B} und eine erste Masse m_{B} auf. Der erste Schwerpunkt P_{B} hat - parallel zu der horizontalen Ebene E_{H} und senkrecht zu der vertikalen Ebene E_{V} betrachtet - einen ersten Abstand A_{B} von der vertikalen Ebene E_{V}. Ferner hat die Energiebereitstellungseinheit 26 einen zweiten Schwerpunkt P_{E} und eine zweite Masse m_{E}. Der zweite Schwerpunkt P_{E} hat - parallel zu der horizontalen Ebene E_{H} und senkrecht zu der vertikalen Ebene E_{V} betrachtet - einen zweiten Abstand A_{E} von der vertikalen Ebene E_{V}.

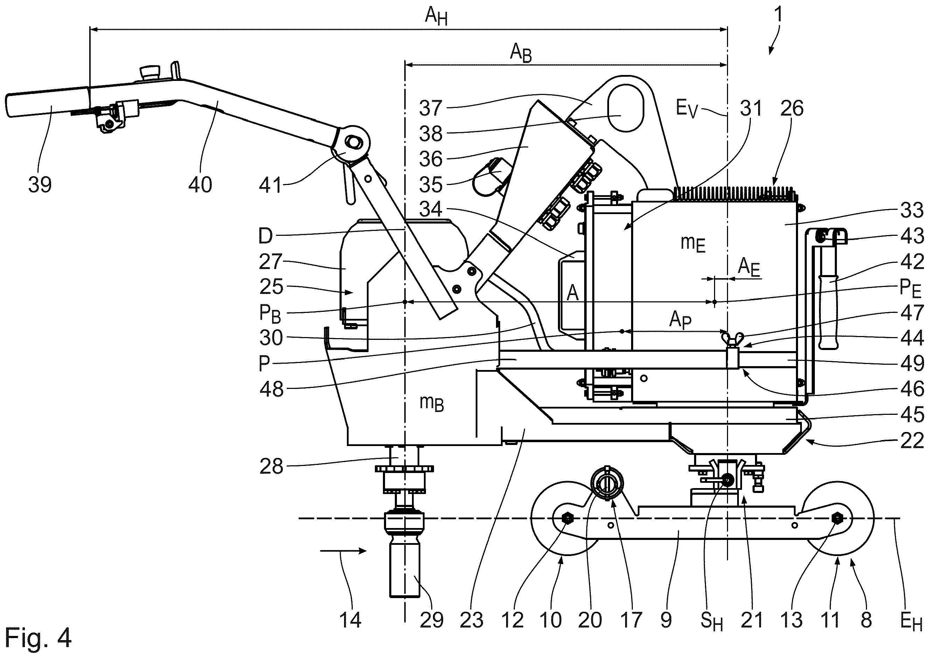

Das Bearbeitungsaggregat 25 und die Energiebereitstellungseinheit 26 sind in dem in Fig. 2 dargestellten Arbeitszustand an unterschiedlichen Seiten der vertikalen Ebene Ev angeordnet. Die Energiebereitstellungseinheit 26 bildet relativ zu der Gelenkeinheit 21, insbesondere relativ zu der horizontalen Schwenkachse S_{H}, ein Gegengewicht zu dem Bearbeitungsaggregat 25. Zum Ausbalancieren der Bearbeitungsmaschine 1 relativ zu der Gelenkeinheit 21, insbesondere relativ zu der horizontalen Schwenkachse S_{H}, umfasst die Bearbeitungsmaschine 1 eine Einstellmechanik 44. Die Einstellmechanik 44 dient zum Einstellen eines Abstandes A der Schwerpunkte P_{B} und P_{E} zueinander. Durch das Einstellen des Abstands A wird ein Gesamtschwerpunkt P der Bearbeitungsmaschine 1 relativ zu der Gelenkeinheit 21, insbesondere relativ zu der vertikalen Ebene Ev, positioniert. Je nach Position weist der Gesamtschwerpunkt P - parallel zu der horizontalen Ebene E_{H} und senkrecht zu der vertikalen Ebene E_{V} betrachtet - einen Abstand A_{P} von der vertikalen Ebene E_{V} auf, der einstellbar ist. In dem in Fig. 2 dargestellten Arbeitszustand ist der Gesamtschwerpunkt P in der vertikalen Ebene E_{V} positioniert, so dass gilt: A_{P} = 0 cm. Demgegenüber ist der Gesamtschwerpunkt P in dem in Fig. 4 dargestellten Transportzustand außerhalb der vertikalen Ebene E_{V} positioniert, so dass gilt: A_{P} > 0 cm.

Die Einstellmechanik 44 umfasst eine erste Linearführung 45, eine zweite Linearführung 46 und ein Arretierelement 47. Die erste Linearführung 45 ist zwischen dem ersten Trägerbauteil 23 und dem zweiten Trägerbauteil 24 ausgebildet. Das zweite Trägerbauteil 24 ist in dem ersten Trägerbauteil 23 teleskopartig linear verlagerbar. Die zweite Linearführung 46 ist als Teleskopgestänge ausgebildet und umfasst ein erstes Teleskoprohr 48 und ein zweites Teleskoprohr 49, das in dem ersten Teleskoprohr 48 linear geführt ist. Das erste Teleskoprohr 48 ist an dem ersten Trägerbauteil 23 befestigt, wohingegen das zweite Teleskoprohr 49 lösbar an dem Wechselrichter 33 der Energiebereitstellungseinheit 26 befestigt ist. Das Teleskopgestänge ist Teil des Trägers 22. Mittels des Arretierelements 47 können die Teleskoprohre 48, 49 relativ zueinander arretiert werden. Mittels der Einstellmechanik 44 ist der zweite Abstand An einstellbar, wohingegen der erste Abstand A_{B} nicht einstellbar ist. Es gilt: A = A_{B} + A_{E}, so dass der Abstand A durch Einstellen des Abstandes A_{E} einstellbar ist.

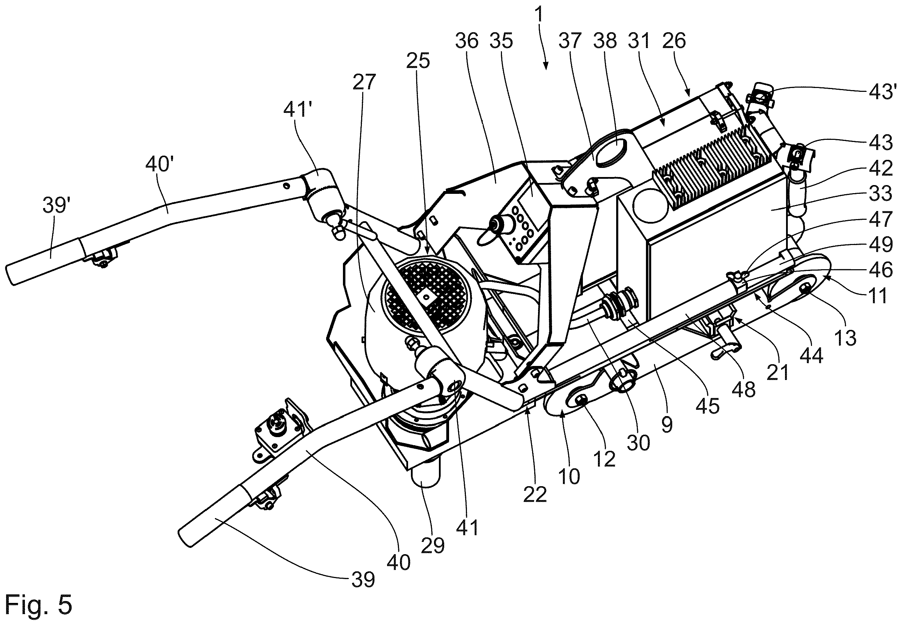

Nachfolgend ist die Funktionsweise der Bearbeitungsmaschine 1 beschrieben:
In dem in den Fig. 4 und 5 dargestellten Transportzustand ist die Energiebereitstellungseinheit 26 mittels der Einstellmechanik 44 derart verlagert, dass sich die Schwerpunkte P_{B} und P_{E} auf einer gemeinsamen Seite der vertikalen Ebene Ev befinden. Der Abstand A_{E} ist somit negativ, so dass der Abstand A zwischen den Schwerpunkten P_{B} und P_{E} minimal ist. Der Gesamtschwerpunkt P der Bearbeitungsmaschine 1 ist in dem Transportzustand - parallel zu der vertikalen Ebene Ev betrachtet - unterhalb der Befestigungsöse 38 positioniert. Für den Abstand A_{P} von der vertikalen Ebene E_{V} gilt somit: A_{P} > 0 cm. Der Abstand Ap ist insbesondere maximal. In dem Transportzustand ist die Bearbeitungsmaschine 1 kompakt und kann mittels der Handgriffe 39, 39' und 42, 42' in einfacher Weise durch zwei Bedienpersonen transportiert werden. Ferner kann die Bearbeitungsmaschine 1 durch eine nicht näher dargestellte Hubeinrichtung angehoben werden, indem die Hubeinrichtung in der Befestigungsöse 38 befestigt wird. Dadurch, dass sich der Gesamtschwerpunkt P unterhalb der Befestigungsöse 38 befindet, ist die Bearbeitungsmaschine 1 im Transportzustand ausbalanciert. Im Transportzustand ist der Querausleger 17 mittels des Schnellverschlusses 20 demontiert.

Befindet sich die Bearbeitungsmaschine 1 mit dem Fahrwerk 8 auf der Schiene 4, so wird die Bearbeitungsmaschine 1 von dem Transportzustand in den Arbeitszustand überführt. Hierzu wird der Querausleger 17 mittels des Schnellverschlusses 20 an dem Fahrwerk 8 montiert, so dass die Bearbeitungsmaschine 1 auf der benachbarten Schiene 5 abgestützt ist.

Das Arretierelement 47 wird gelöst und die Energiebereitstellungseinheit 26 mittels der Linearführungen 45, 46 derart verlagert, dass sich die Schwerpunkte P_{B} und P_{E} an unterschiedlichen Seiten der vertikalen Ebene Ev befinden. Die Energiebereitstellungseinheit 26 wirkt hierdurch relativ zu der Gelenkeinheit 21 als Gegengewicht zu dem Bearbeitungsaggregat 25. Der Abstand A zwischen den Schwerpunkten P_{B} und P_{E} wird derart mittels der Linearführungen 45, 46 eingestellt, dass sich der Gesamtschwerpunkt P möglichst nahe an der vertikalen Ebene Ev befindet, vorzugsweise in der vertikalen Ebene Ev positioniert ist. Hierdurch ist die Bearbeitungsmaschine 1 relativ zu der Gelenkeinheit 21, insbesondere zu der horizontalen Schwenkachse S_{H}, ausbalanciert. Anschließend wird mittels des Arretierelements 47 der eingestellte Abstand A fixiert, in dem die Teleskoprohre 48, 49 zueinander fixiert werden. Der Arbeitszustand ist in den Fig. 1 und 2 veranschaulicht.

Dadurch, dass die Bearbeitungsmaschine 1 relativ zu der Gelenkeinheit 21 ausbalanciert ist, ist das Bearbeiten des Gleises 2, also das Montieren und/oder Demontieren der Schwellenschrauben 7, mittels des Bearbeitungsaggregats 25 einfach und bedienerfreundlich möglich. Das Bearbeitungswerkzeug 29 kann von einer Bedienperson in einfacher Weise höhenverstellt werden und/oder an unterschiedlichen Seiten der Schiene 4 positioniert werden, indem das Bearbeitungsaggregat 25 manuell um die horizontale Schwenkachse S_{H} und/oder um die vertikale Schwenkachse Sv verschwenkt wird. Zum Verschwenken ist lediglich ein minimaler Kraftaufwand der Bedienperson nötig.

## Patentansprüche

1. Bearbeitungsmaschine zur Gleisbearbeitung mit
- einem Träger (22),
- einem an dem Träger (22) angeordneten Fahrwerk (8) zum manuellen Verschieben der Bearbeitungsmaschine (1) auf einer Schiene (4) eines Gleises (2),
- einer Gelenkeinheit (21) zum Verschwenken des Trägers (22) relativ zu dem Fahrwerk (8),
- einem an dem Träger (22) angeordneten Bearbeitungsaggregat (25) zum Bearbeiten des Gleises (2),
- einem an dem Träger (22) angeordneten Gegengewicht zu dem Bearbeitungsaggregat (25), und
- einer Einstellmechanik (44) zum Einstellen eines Abstands (A) zwischen einem Schwerpunkt (P_{B}) des Bearbeitungsaggregats (25) und einem Schwerpunkt (P_{E}) des Gegengewichts,
**dadurch gekennzeichnet,**
**dass** der Träger (22) ein erstes Trägerbauteil (23) und ein zweites Trägerbauteil (24) umfasst, die zum Einstellen des Abstands (A) relativ zueinander verlagerbar sind.

2. Bearbeitungsmaschine nach Anspruch 1, **dadurch gekennzeichnet, dass** die Gelenkeinheit (21) eine horizontale Schwenkachse (S_{H}) zum Höhenverstellen des Bearbeitungsaggregats (25) ausbildet.

3. Bearbeitungsmaschine nach Anspruch 1 oder 2, **dadurch gekennzeichnet,**
**dass** die Gelenkeinheit (21) eine vertikale Schwenkachse (Sv) zum Positionieren des Bearbeitungsaggregats (25) an zwei Seiten einer Schiene (4) ausbildet.

4. Bearbeitungsmaschine nach mindestens einem der vorangegangenen Ansprüche, **dadurch gekennzeichnet,**
**dass** das Bearbeitungsaggregat (25) und das Gegengewicht an unterschiedlichen Seiten einer Ebene (Ev) angeordnet sind, die durch die Gelenkeinheit (21) definiert ist.

5. Bearbeitungsmaschine nach mindestens einem der vorangegangenen Ansprüche, **gekennzeichnet**
**durch** mindestens einen Handgriff (39, 39') zum manuellen Betätigen der Gelenkeinheit (21).

6. Bearbeitungsmaschine nach mindestens einem der vorangegangenen Ansprüche, **dadurch gekennzeichnet,**
**dass** mindestens ein erster Handgriff (39, 39') und mindestens ein zweiter Handgriff (42, 42') an unterschiedlichen Seiten einer Ebene (Ev) angeordnet sind, die durch die Gelenkeinheit (21) definiert ist.

7. Bearbeitungsmaschine nach mindestens einem der vorangegangenen Ansprüche, **dadurch gekennzeichnet,**
**dass** die Einstellmechanik (44) mindestens eine Führung (45, 46) umfasst.

8. Bearbeitungsmaschine nach mindestens einem der vorangegangenen Ansprüche, **dadurch gekennzeichnet,**
**dass** die Einstellmechanik (44) mindestens ein Arretierelement (47) umfasst.

9. Bearbeitungsmaschine nach mindestens einem der vorangegangenen Ansprüche, **gekennzeichnet**
**durch** eine Energiebereitstellungseinheit (26) zur Energieversorgung des Bearbeitungsaggregats (25).

10. Bearbeitungsmaschine nach Anspruch 9, **dadurch gekennzeichnet, dass** die Energiebereitstellungseinheit (26) das Gegengewicht zumindest teilweise ausbildet.

11. Bearbeitungsmaschine nach Anspruch 9 oder 10, **dadurch gekennzeichnet,**
**dass** die Energiebereitstellungseinheit (26) mindestens einen Akkumulator (32) umfasst.

12. Bearbeitungsmaschine nach mindestens einem der vorangegangenen Ansprüche, **dadurch gekennzeichnet,**
**dass** das Fahrwerk (8) mindestens zwei Führungsrollen (10, 11) zum Verschieben auf der Schiene (4) umfasst.

13. Bearbeitungsmaschine nach mindestens einem der vorangegangenen Ansprüche, **gekennzeichnet**
**durch** einen Querausleger (17) zum Abstützen auf einer benachbarten Schiene (5).

14. Verfahren zur Gleisbearbeitung mit den Schritten:
- Bereitstellen einer Bearbeitungsmaschine (1) nach mindestens einem der Ansprüche 1 bis 13,
- Einstellen eines Abstands (A) zwischen einem Schwerpunkt (P_{B}) des Bearbeitungsaggregats (25) und einem Schwerpunkt (P_{E}) des Gegengewichts mittels der Einstellmechanik (44), und
- Durchführen einer Gleisbearbeitung mittels des Bearbeitungsaggregats (25).

## Claims

1. Processing machine for track processing comprising
- a carrier (22),
- a chassis (8) arranged on the carrier (22) for manually sliding the processing machine (1) on a rail (4) of a track (2),
- a joint unit (21) for swivelling the carrier (22) relative to the chassis (8),
- a processing assembly (25) arranged on the carrier (22) for processing the track (2),
- a counterweight to the processing assembly (25) arranged on the carrier (22), and
- an adjustment mechanism (44) for adjusting a distance (A) between a centre of gravity (P_{B}) of the processing assembly (25) and a centre of gravity (P_{E}) of the counterweight,
**characterized in that**
the carrier (22) comprises a first carrier component (23) and a second carrier component (24), which are displaceable relative to one another for adjusting the distance (A).

2. Processing machine according to claim 1, **characterized in that** the joint unit (21) configures a horizontal swivel axis (S_{H}) for the height adjustment of the processing assembly (25).

3. Processing machine according to claim 1 or 2, **characterized in that** the joint unit (21) configures a vertical swivel axis (Sv) for positioning the processing assembly (25) on two sides of a rail (4).

4. Processing machine according to at least one of the preceding claims, **characterized in that**
the processing assembly (25) and the counterweight are arranged on different sides of a plane (Ev) which is defined by the joint unit (21).

5. Processing machine according to at least one of the preceding claims, **characterized by**
at least one hand grip (39, 39') for manually actuating the joint unit (21).

6. Processing machine according to at least one of the preceding claims, **characterized in that**
at least one first hand grip (39, 39') and at least one second hand grip (42, 42') are arranged on different sides of a plane (Ev) which is defined by the joint unit (21).

7. Processing machine according to at least one of the preceding claims, **characterized in that**
the adjustment mechanism (44) comprises at least one guide (45, 46).

8. Processing machine according to at least one of the preceding claims, **characterized in that**
the adjustment mechanism (44) comprises at least one locking element (47).

9. Processing machine according to at least one of the preceding claims, **characterized by**
an energy supply unit (26) for supplying energy to the processing assembly (25).

10. Processing machine according to claim 9, **characterized in that**
the energy supply unit (26) at least partially configures the counterweight.

11. Processing machine according to claim 9 or 10, **characterized in that** the energy supply unit (26) comprises at least one accumulator (32).

12. Processing machine according to at least one of the preceding claims, **characterized in that**
the chassis (8) comprises at least two guiding rollers (10, 11) for sliding on the rail (4).

13. Processing machine according to at least one of the preceding claims, **characterized by**
a transverse boom (17) for the support on an adjacent rail (5).

14. Method for track processing comprising the steps of:
- providing a processing machine (1) according to at least one of claims 1 to 13,
- adjusting a distance (A) between a centre of gravity (P_{B}) of the processing assembly (25) and a centre of gravity (P_{E}) of the counterweight by means of the adjustment mechanism (44), and
- performing a track processing by means of the processing assembly (25).

## Revendications

1. Machine d'usinage pour l'usinage de voies comprenant
- un support (22),
- un mécanisme de roulement (8) disposé sur le support (22) pour déplacer manuellement la machine d'usinage (1) sur un rail (4) d'une voie ferrée (2),
- une unité d'articulation (21) pour faire pivoter le support (22) par rapport au mécanisme de roulement (8),
- un groupe d'usinage (25) disposé sur le support (22) pour usiner la voie ferrée (2),
- un contrepoids disposé sur le support (22) par rapport au groupe d'usinage (25), et
- un mécanisme de réglage (44) pour régler une distance (A) entre un centre de gravité (P_{B}) du groupe d'usinage (25) et un centre de gravité (P_{E}) du contrepoids,
**caractérisée en ce que**
le support (22) comprend un premier composant de support (23) et un deuxième composant de support (24) qui peuvent être déplacés l'un par rapport à l'autre pour régler la distance (A).

2. Machine d'usinage selon la revendication 1, **caractérisée en ce que** l'unité d'articulation (21) forme un axe de pivotement horizontal (S_{H}) pour le réglage en hauteur du groupe d'usinage (25).

3. Machine d'usinage selon la revendication 1 ou 2, **caractérisée en ce que**
l'unité d'articulation (21) forme un axe de pivotement vertical (Sv) pour positionner le groupe d'usinage (25) sur deux côtés d'un rail (4).

4. Machine d'usinage selon au moins une des revendications précédentes, **caractérisée en ce que**
le groupe d'usinage (25) et le contrepoids sont disposés sur différents côtés d'un plan (Ev) qui est défini par l'unité d'articulation (21).

5. Machine d'usinage selon au moins une des revendications précédentes, **caractérisée par**
au moins une poignée (39, 39') pour actionner manuellement l'unité d'articulation (21).

6. Machine d'usinage selon au moins une des revendications précédentes, **caractérisée en ce qu'**
au moins une première poignée (39, 39') et au moins une deuxième poignée (42, 42') sont disposées sur des côtés différents d'un plan (Ev) qui est défini par l'unité d'articulation (21).

7. Machine d'usinage selon au moins une des revendications précédentes, **caractérisée en ce que**
le mécanisme de réglage (44) comprend au moins un guide (45, 46).

8. Machine d'usinage selon au moins une des revendications précédentes, **caractérisée en ce que**
le mécanisme de réglage (44) comprend au moins un élément d'arrêt (47).

9. Machine d'usinage selon au moins une des revendications précédentes, **caractérisée par**
une unité de mise à disposition d'énergie (26) pour l'alimentation en énergie du groupe d'usinage (25).

10. Machine d'usinage selon la revendication 9, **caractérisée en ce que** l'unité de mise à disposition d'énergie (26) forme au moins partiellement le contrepoids.

11. Machine d'usinage selon la revendication 9 ou 10, **caractérisée en ce que**
l'unité de mise à disposition d'énergie (26) comprend au moins un accumulateur (32).

12. Machine d'usinage selon au moins l'une des revendications précédentes, **caractérisée en ce que**
le mécanisme de roulement (8) comprend au moins deux galets de guidage (10, 11) destinés à se déplacer sur le rail (4).

13. Machine d'usinage selon au moins une des revendications précédentes, **caractérisée par**
un bras transversal (17) destiné à prendre appui sur un rail voisin (5).

14. Procédé d'usinage de voies comprenant les étapes suivantes :
- mise à disposition d'une machine d'usinage (1) selon au moins l'une des revendications 1 à 13,
- réglage d'une distance (A) entre un centre de gravité (P_{B}) du groupe d'usinage (25) et un centre de gravité (P_{E} ) du contrepoids au moyen du mécanisme de réglage (44), et
- réalisation d'un usinage de voies au moyen du groupe d'usinage (25).
